**Europäisches Patentamt**

**European Patent Office**

**Office européen des brevets**

(11) Publication number: **0 150 947**
**A2**

(12) **EUROPEAN PATENT APPLICATION**

(21) Application number: **85300238.4**

(22) Date of filing: **14.01.85**

(51) Int. Cl.⁴: **G 06 K 11/00**

(30) Priority: **26.01.84 GB 8402096**

(43) Date of publication of application: **07.08.85**
**Bulletin 85/32**

(84) Designated Contracting States: **AT BE CH DE FR GB IT LI LU NL SE**

(71) Applicant: **E.P.R. Bureau Limited, 21 Douglas Street, London SW1P 4PE (GB)**

(72) Inventor: **Reynolds, Robert Anthony, 54 Hermitage Road, London N4 1LY (GB)**

(74) Representative: **Carpmael, John William Maurice et al, CARPMAELS & RANSFORD 43 Bloomsbury Square, London, WC1A 2RA (GB)**

(54) **Scanning system.**

㊄ The present invention relates to a scanning system for producing and storing in a digital computer a digital representation of an image. In particular, but not exclusively, the system will be of use in «digitising» architectural and technical drawings.

According to the present invention, there is provided a scanning system, for producing and storing a digital representation of an image, comprising:

a support, for the image to be scanned, and a carriage which are movable relative to one another in a longitudinal direction;

a probe, movable on the carriage in a direction transverse to said longitudinal direction, for producing a digital signal related to the density of the image;

a switch for producing a digital signal each time the probe reaches an end of its movement on the carriage; and

a digital computer for producing digital control signals for controlling the relative movement of the support and the carriage and the movement of the probe on the carriage so that the probe can be scanned over the image, and for receiving digital image signals produced by the probe at each position during its scanning and digital switch signals and correlating these signals with the digital control signals to produce a digital representation of the image for storage in the computer.

- 1 -

## Scanning System

The present invention relates to a scanning system for producing and storing in a digital computer a digital representation of an image. In particular, but not exclusively, the system will be of use in "digitising" architectural and technical drawings.

In an article entitled "A shaded-picture scanning attachment for incremental plotters" by I.P. Paget and R.T. Wood, published in The Computer Journal, Vol. 24, No. 3, 1981, there is disclosed a picture scanning attachment consisting of a high resolution optical reflective sensor, and associated amplification stages, in the form of a small probe which replaced the pen and penholder in an incremental plotter, and thus allows shaded pictures to be scanned for subsequent processing by a digital computer. The article shows the use of the attachment to scan, for instance, postage stamps and digitise the scan using a sixteen level grey scale.

The scanning attachment shown in the article has a number of disadvantages. For instance, the attachment must be manually calibrated for each different scanning speed. Also, the attachment cannot be used with a multiprocessing computer because the unpredictable delay in data transfer to such a computer means that there is not a fixed time-lapse between sending a signal to the attachment and beginning to receive data from the sensor. This makes it impossible for the computer to process correctly the digitised information.

It is an object of the present invention to provide a scanning system which at least in part overcomes the disadvantages of the scanning attachment described in the article.

According to the present invention, there is provided a scanning system, for producing and storing a digital representation of an image, comprising:

a support,for the image to be scanned, and a carriage which are movable relative to one another in a longitudinal direction;

a probe, movable on the carriage in a direction transverse to said longitudinal direction, for producing a digital signal related to the density of the image;

a switch for producing a digital signal each time the probe reaches an end of its movement on the carriage; and

a digital computer for producing digital control signals for controlling the relative movement of the support and the carriage and the movement of the probe on the carriage so that the probe can be scanned over the image, and for receiving digital image signals produced by the probe at each position during its scanning and digital switch signals and correlating these signals with the digital control signals to produce a digital representation of the image for storage in the computer.

It will be appreciated that the support may be movable and the carriage fixed, as in a conventional drum-type plotter, or that the carriage may be movable over a fixed support, as in a conventional flat bed-type plotter.

Preferably, the relative movement of the support and the carriage and the movement of the probe on the carriage is incremental movement so that the probe can be incrementally scanned over the image. However, it is also possible to use continuous scanning movement of the probe over the image.

Preferably, the probe is mounted in a probe holder which is movably mounted on the carriage.

- 3 -

The probe may comprise an optical fiber, a light source and a photosensor. However, it is preferred that the probe is a high resolution optical reflective sensor. Such sensors are well known in the art and need no further description.

The probe may be arranged to give a digital signal having only two possible values, indicating no image density and some image density respectively.

Alternatively, the digital signal may have a number, for instance sixteen, of possible values, indicating varying degrees of image density on a defined grey scale.

Preferably, the digital value of the image signal is displayed by a numeric indicator on the image support as a diagnostic aid.

The support for the image may be any of those normally used in plotters, and may therefore comprise a flat plate, a large drum or a small roller.

Preferably, the probe or the probe holder is lifted away from the image at each end of its travel on the carriage. This may be achieved in any known manner, for instance as effected on many available plotters.

The switch may comprise for instance a light source/photocell combination at each end of the carriage, the light path being broken by the probe at each end of its travel. Alternatively, the switch may comprise a microswitch operated by abutment by the probe or the probe holder.

However, in the preferred embodiment the switch operates in response to the probe or probe holder being moved away from the image.

Preferably the probe or probe holder has on it a rounded metal tip for engagement with the image. This has the dual function of keeping the probe a

0150947

- 4 -

fixed distance from the image and of eliminating static electricity charges on the image which can cause false data to be produced by the probe.

If desired two or more probes may be provided either on the same or on different carriages. The data from the probes may be sent to the computer by separate serial lines or may be sent in multiplexed form along a single serial line.

It is envisaged that a scanning system of the present invention can readily be produced by suitably modifying a known computer system incorporating a plotter. This will already include the support, carriage and holder which will hold a pen for producing the image on a paper held on the support. The plotter is controlled by the computer to scan the pen over the support. It will then only be necessary to mount the probe on the holder instead of the pen and provide the switches and data lines to the computer.

In most available plotters, the holder is moved away from the paper on which the image is being plotted by a known up/down mechanism at the ends of the pen's travel on the carriage. Generally a light is provided to indicate whether the pen is up or down. If such a plotter is modified to produce a system according to the invention, it is preferred that the switch is provided by the pen up/down indicator light circuit.

The present system is self-calibrating as the signal from the switch which is used to provide data relating to the beginning and end of the probe's travel across the carriage. Thus the computer can correlate the data from the probe and the control signals with the beginning and end of the travel, whatever speed the probe travels across the carriage. Moreover, the introduction of unpredictable time delays does not prevent the computer from correctly correlating the data and assembling a digital representation of the image. Therefore the present system can be part of a multiprocessing computer system.

Once the digital representation of the image has been stored in the computer, it may be manipulated in conventional manner, for instance to carry out design studies or to adapt the image to a new set of conditions. In the preferred embodiment, the plotter is reconverted to enable it to plot the original or amended image. Alternatively, the system may include a separate plotter controlled by the computer.

In an exemplary embodiment of the invention, a Benson Electronics Model 1322 drum-type incremental plotter was modified to provide a system in accordance with the invention.

The pens from the plotter were removed and replaced by a Hewlett Packard HEDS-1000 optical reflective sensor. The sensor was fitted with a rounded metal tip for contacting the drawing to keep the sensor a fixed distance away therefrom and to prevent any build-up of static electricity on the drawing.

The plotter is provided with a pen-holder up/down mechanism of conventional type and an indicator light for showing whether the pen is up or down. This circuit for powering the indicator light is used to operate a switch which indicates when the holder reaches an end of its travel.

The operation of the plotter is controlled by a Prime 150 series digital computer to cause the holder, and therefore the probe, to carry out a raster scan of any image attached to the drum, for instance an architectural drawing, in known manner.

- 6 -

The digital signals are transmitted to the computer by a serial link. The transmission is controlled by the switch so that data is only transmitted with the holder in the pen down position. The computer can then exactly correlate incoming data with the position of the probe on the image and can thus produce in known manner a correct digital representation of the image. The digital representation is then stored in the computer for future amendment and/or replotting.

A numeric indicator, for instance a Texas Instruments TIL 311 display, is provided on the plotter and displays thereon the instantaneous digital value transmitted from the probe to the computer as a diagnostic aid for the user.

The software needed to program the computer to control the system may be readily designed by a skilled man or may be at least in part bought "off the shelf". It therefore needs no further description.

If desired, a second plotter, in unmodified form may be attached to the system in known manner.

CLAIMS

1.     A scanning system, for producing and storing a digital representation of an image, comprising:

a support, for the image to be scanned, and a carriage which are movable relative to one another in a longitudinal direction;

a probe, movable on the carriage in a direction transverse to said longitudinal direction, for producing a digital signal related to the density of the image;

a switch for producing a digital signal each time the probe reaches an end of its movement on the carriage; and

a digital computer for producing digital control signals for controlling the relative movement of the support and the carriage and the movement of the probe on the carriage so that the probe can be scanned over the image, and for receiving digital image signals produced by the probe at each position during its scanning and digital switch signals and correlating these signals with the digital control signals to produce a digital representation of the image for storage in the computer.

2.     The system of claim 1, wherein the support is movable and the carriage is fixed.

3.     The system of claim 2, wherein the carriage is movable over a fixed support.

4.     The system of any one of claims 1 to 3, wherein the relative movement of the support and the carriage and the movement of the probe on the carriage are incremental.

5.     The system of any one of claims 1 to 4, wherein the probe is mounted in a probe holder which is movably mounted on the carriage.

0150947

6.     The system of any one of claims 1 to 5 wherein the probe comprises an optical fiber, a light source and a photosensor.

7.     The system of any one of claims 1 to 6, wherein the probe produces a digital signal which is displayed on a numeric indicator.

8.     The system of any one of claims 1 to 7, wherein the probe or probe holder is lifted away from the image at each end of its travel on the carriage.

9.     The system of claim 8, wherein the switch operates in response to the probe or probe holder being moved away from the image.

10.    The system of any one of claims 1 to 10 wherein the probe or probe holder has on it a round metal tip for engagement with the image.